# EUROPÄISCHE PATENTSCHRIFT

(11) **EP 3 980 729 B1**
(45) Veröffentlichungstag und Bekanntmachung des Hinweises auf die Patenterteilung: **17.01.2024**
(21) Anmeldenummer: 20723853.6
(22) Anmeldetag: 04.05.2020
(51) Int. Cl.: G01F 1/684

(54) **THERMISCHES DURCHFLUSSMESSGERÄT**
THERMAL FLOWMETER
DÉBITMÈTRE THERMIQUE

(30) Priorität: 07.06.2019 DE 102019115558
(43) Veröffentlichungstag der Anmeldung: 13.04.2022
(73) Patentinhaber: Endress+Hauser Flowtec AG, 4153 Reinach (CH)
(72) Erfinder: GRÜN, Alexander, 79539 Lörrach (DE); HABERT, Mathieu, 68170 Rixheim (FR)
(74) Vertreter: Koslowski, Christine Adelheid
(86) Internationale Anmeldenummer: PCT/EP2020/062250
(87) Internationale Veröffentlichungsnummer: WO 2020/244856

(56) Entgegenhaltungen:
- EP-A1- 0 180 974
- DE-A1-102014 114 940
- US-A1- 2018 313 679

## Beschreibung

Diese Erfindung betrifft ein thermisches Durchflussmessgerät und ein Verfahren zum Betreiben eines thermischen Durchflussmessgeräts.

Die thermische Durchflussmessung basiert darauf, dass über einen Energieeintrag über eine Sonde in ein an der Sonde vorbeiströmenden Medium oder über die Temperatur einer im Medium befindlichen beheizten Sonde Rückschlüsse auf den Massestrom des Mediums gezogen werden können. Allerdings lässt sich aus dem Energieeintrag bzw. aus der Temperatur der Sonde nicht ableiten, in welche Richtung das Medium strömt.

Die Schrift DE102015118123A1 zeigt einen Sensor eines thermischen Durchflussmessgeräts, welches in ein Messrohr des Durchflussmessgeräts getaucht wird und mehrere Sonden aufweisen, die entweder zum Beheizen des Mediums und zur Messung der eigenen Temperatur oder zum Messen der Temperatur des Mediums eingerichtet sind. Des Weiteren ist ein Strömungswiderstand dazu eingerichtet, eine richtungsabhängige Anströmung einer beheizbaren Sonde zu bewirken, um aus der Richtungsabhängigkeit der Anströmung eine eindeutige Richtungsangabe der Strömung des Mediums im Messrohr herleiten zu können. Jedoch hat sich gezeigt, dass bei geringen bis mittleren Strömungsgeschwindigkeiten eine Strömungsrichtungsangabe mit hohen Unsicherheiten behaftet ist.

Aufgabe der Erfindung ist es daher, ein Durchflussmessgerät vorzuschlagen, mittels welchem eine zuverlässige Strömungsrichtungserkennung des Mediums im Messrohr ermöglicht wird.

Die Aufgabe wird gelöst durch ein thermisches Durchflussmessgerät gemäß dem unabhängigen Anspruch 1.

Ein erfindungsgemäßes thermisches Durchflussmessgerät zur Messung des Massedurchflusses eines Mediums in einem Messrohr umfasst:
ein Messrohr mit einer Messrohrwand;
einen Sensor mit vier Sonden, welche Sonden ausgehend von einem Sensorgrundkörper in das Messrohr hineinragen, wobei die Sonden dazu eingerichtet sind, das Medium zu heizen, dessen Temperatur zu bestimmen oder eine Strömung des Mediums im Messrohr zu beeinflussen;
eine elektronische Mess-/Betriebsschaltung, welche dazu eingerichtet ist, zumindest drei Sonden zu betreiben und mittels deren Betrieb Durchflussmesswerte zu erstellen und bereitzustellen,
wobei jede Sonde einen Sondengrundkörper und einen Sondenwirkkörper aufweist, wobei der Sondengrundkörper jeweils auf einer dem Sensorgrundkörper zugewandten Seite der entsprechenden Sonde angeordnet ist, und wobei der Wirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen, wobei die Sondengrundkörper säulenförmig ausgestaltet sind,
wobei die Sondengrundkörper auf einer Oberfläche des Sensorgrundkörpers eine Raute aufspannen, wobei die Raute durch Flächenschwerpunkte von Querschnitten der Sondengrundkörper definiert ist und eine erste Diagonale und eine zweite Diagonale aufweist, wobei eine erste Sonde dazu eingerichtet ist, die Temperatur des Mediums zu messen,
wobei eine zweite Sonde und eine dritte Sonde dazu eingerichtet sind, das Medium zu beheizen und jeweils die eigene Temperatur zu bestimmen,
wobei die erste Sonde auf einer ersten Seite der ersten Diagonalen angeordnet ist, und wobei die dritte Sonde auf einer zweiten Seite der ersten Diagonalen angeordnet ist, wobei die zweite und eine vierte Sonde auf gegenüberliegenden Seiten der zweiten Diagonalen angeordnet sind, wobei eine erste Diagonale der Raute einen Drehwinkel η zu einer Normalen eines Messrohrquerschnitts aufweist,
wobei η größer als1 Grad und insbesondere größer als 2 Grad und bevorzugt größer als 3 Grad ist, wobei die vierte Sonde dazu eingerichtet ist, eine Teilströmung des Mediums zwischen der ersten Sonde und der dritten Sonde zu behindern,
wobei der Sondenwirkkörper der vierten Sonde entlang der ersten Diagonalen eine erste Breite und entlang der zweiten Diagonalen eine zweite Breite aufweist, wobei die zweite Breite um einen Faktor von mindestens 1.1 und insbesondere mindestens 1.2 und bevorzugt mindestens 1.3 größer ist als die erste Breite,
und wobei ein geometrischer Schwerpunkt des Sondenwirkkörpers der vierten Sonde in Richtung der zweiten Sonde versetzt ist.

Auf diese Art und Weise kann ein Wärmestrom von der dritten Sonde zur ersten Sonde zumindest teilweise unterbunden werden, was die Messung des Durchflusses verbessert.

Durch diese Sondenanordnung erreicht man eine hohe Symmetrie der Anordnung bzgl. Strömungswiderstände des Sensors hinsichtlich beider möglichen Strömungsrichtungen des Mediums im Messrohr.

Es hat sich überraschenderweise gezeigt, dass ein leichtes Drehen des Sensorgrundkörpers eine deutlich bessere Strömungsrichtungserkennung über einen weiten Geschwindigkeitsbereich aufweist, Insbesondere bei hohen Strömungsgeschwindigkeiten größer als 70 m/s wirkt sich eine Drehung des Sensors als vorteilhaft aus.

Das Durchflussmessgerät wird dabei bevorzugt zur Durchflussmessung von Gasen eingesetzt. Säulenförmig bedeutet in diesem Fall, dass der Sondengrundkörper aus dem Sensorgrundkörper hervorsteht und insbesondere eine Längsachsensymmetrie aufweist. Für eine Länge I entlang der Längsachse und ein Volumen V des Sondengrundkörpers gilt dabei: (I^3/V)^(0.5) größer 2^(0.5) und insbesondere größer als 2.

In einer Ausgestaltung ist η kleiner als 20 Grad und insbesondere kleiner als 15 Grad und bevorzugt kleiner als 10 Grad ist. Wichtig hierbei ist, dass eine in einem Strömungsschatten befindliche Sonde, also je nach Strömungsrichtung die erste Sonde oder die dritte Sonde vollständig im Strömungsschatten gebildet aus der zweiten Sonde und der vierten Sonde verbleibt.

Erfindungsgemäß ist eine vierte Sonde dazu eingerichtet ist, eine Teilströmung des Mediums zwischen der ersten Sonde und der dritten Sonde zu behindern.

Der Wärmeübertrag der heizenden Sonden auf das Medium ist ausreichend gering, so dass die erste Sonde unabhängig von der Strömungsrichtung des Mediums in guter Näherung die Temperatur des Mediums unbeeinflusst durch den Wärmeübertrag erfasst. Ein erster Temperaturunterschied zwischen der ersten Sonde und der zweiten Sonde ist dazu geeignet, um für eine Messung der Strömungsgeschwindigkeit des Mediums herangezogen zu werden. Ein zweiter Temperaturunterschied zwischen der ersten Sonde und der dritten Sonde ist dazu geeignet um für eine Messung der Strömungsrichtung herangezogen zu werden. Beispielsweise kann bei gleicher Heizleistung der zweiten Sonde und der dritten Sonde im Falle eines im Vergleich zum ersten Temperaturunterschied größeren zweiten Temperaturunterschied darauf geschlossen werden, dass sich die dritte Sonde im Strömungsschatten befindet. Beispielsweise können aber auch ein zeitlicher Verlauf des ersten Temperaturunterschieds sowie des zweiten Temperaturunterschieds genutzt werden, um Durchflussmesswerten für beide Strömungsrichtungen zu erwartende Temperaturen zuzuordnen. In diesem Fall kann die Heizleistung der dritten Sonde verschieden zur Heizleistung der zweiten Sonde sein.

In einer Ausgestaltung ist eine Außenfläche des Sondenwirkkörpers der vierten Sonde symmetrisch bezüglich der zweiten Diagonalen.

In einer Ausgestaltung umfassen die erste Sonde, die zweite Sonde und die dritte Sonde jeweils eine Sondenhülse,
wobei das Durchflussmessgerät Widerstandthermometer aufweist, wobei in durch die Sondenhülsen umfassten Innenräumen jeweils ein Widerstandthermometer angeordnet ist, welches Widerstandthermometer dazu eingerichtet ist, eine Temperatur zu erfassen oder Wärmeenergie abzugeben.

In einer Ausgestaltung ist die vierte Sonde massiv.

In einer Ausgestaltung ist ein zur ersten Sonde gehörender Innenwinkel der Raute kleiner als 90° und insbesondere kleiner als 75° und bevorzugt kleiner als 60°.

Dadurch ist ein verminderter Strömungswiderstand des Sensors im Messrohr sowie eine gute Anströmung der Sonden sichergestellt.

In einer Ausgestaltung weist ein Flächenschwerpunkt eines Querschnitts des Sondengrundkörpers der vierten Sonde zu einem Flächenschwerpunkt eines Querschnitts des Sondengrundkörpers der zweiten Sonde einen zweiten Abstand auf.
wobei ein Minimalabstand der Außenfläche des Sondenwirkkörpers der vierten Sonde zu einer Außenfläche des Sondenwirkkörpers der zweiten Sonde kleiner ist als 30% und insbesondere kleiner als 15% und bevorzugt kleiner als 5% des zweiten Abstands.

In einer Ausgestaltung ist ein erster Außendurchmesser der ersten Sonde, der zweiten Sonde sowie der dritten Sonde in den jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm.

In einer Ausgestaltung weist ein Flächenschwerpunkt eines Querschnitts des Sondengrundkörpers der ersten Sonde zu einem Flächenschwerpunkt eines Querschnitts des Sondengrundkörpers der dritten Sonde einen ersten Abstand auf,
wobei der erste Abstand mindestens zwei erste Außendurchmesser ist.

In einer Ausgestaltung weisen Querschnitte der ersten Sonde, der zweiten Sonde und sowie der dritten Sonde zumindest in Bereichen der Sondenwirkkörper einen runden Umriss auf.

Runde Umrisse haben eine erleichterte Fertigung und strömungsrichtungsunabhängige Strömungswiderstände zur Folge.

Im Folgenden wird die Erfindung anhand von schematischen Ausführungsbeispielen beschrieben.

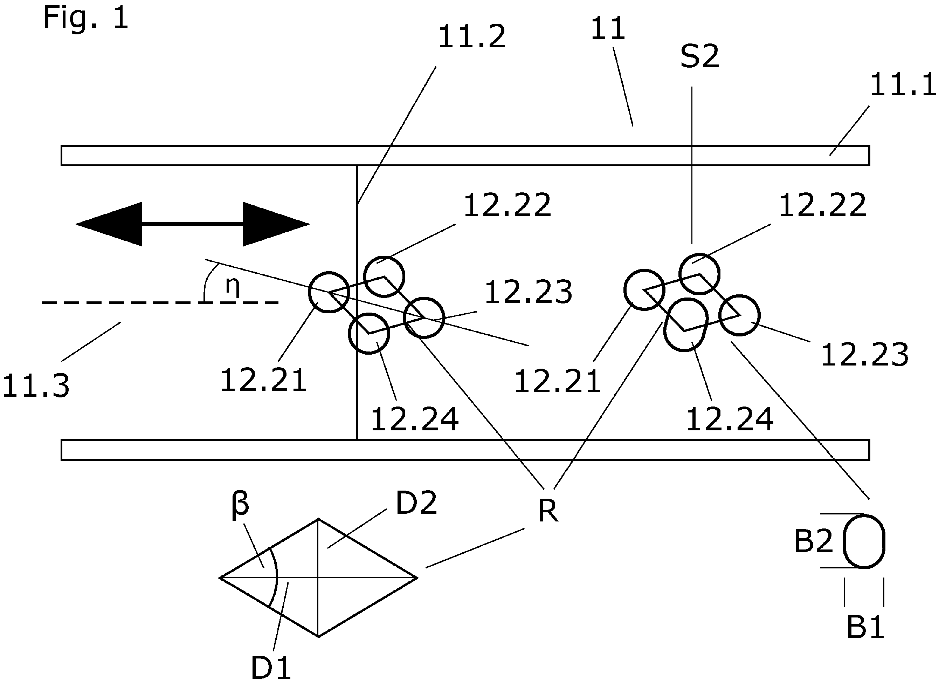

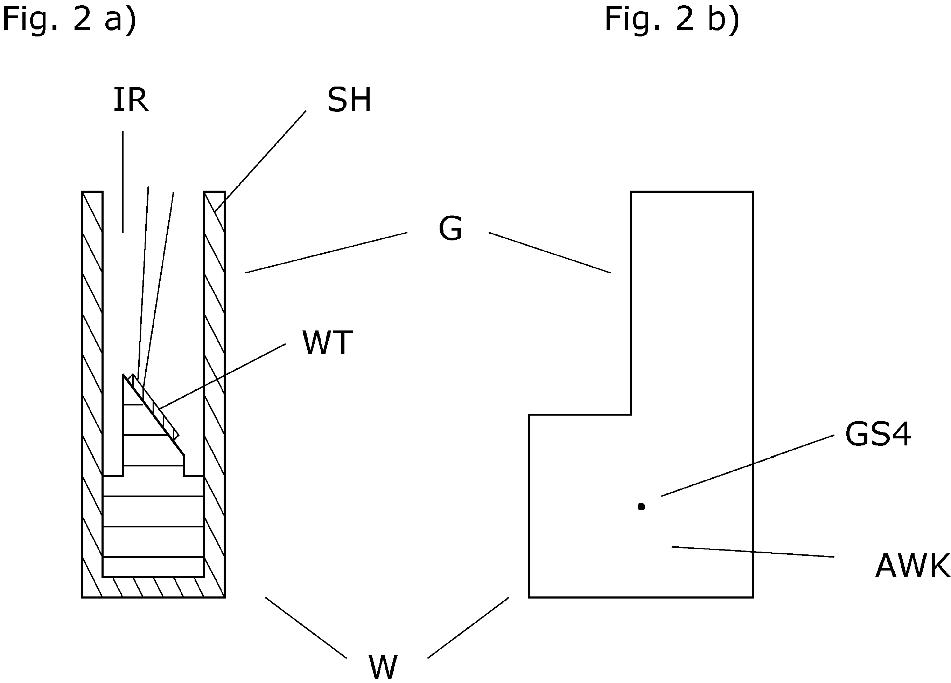

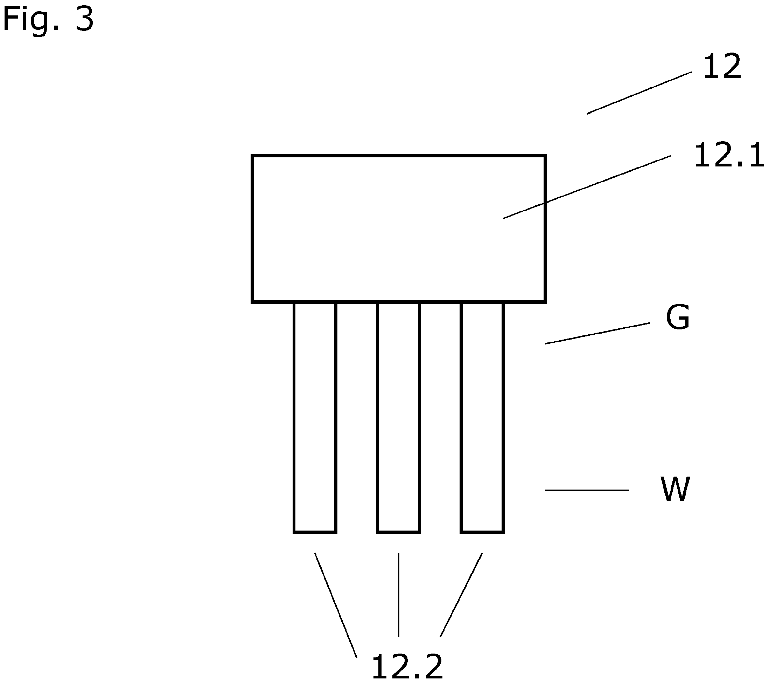

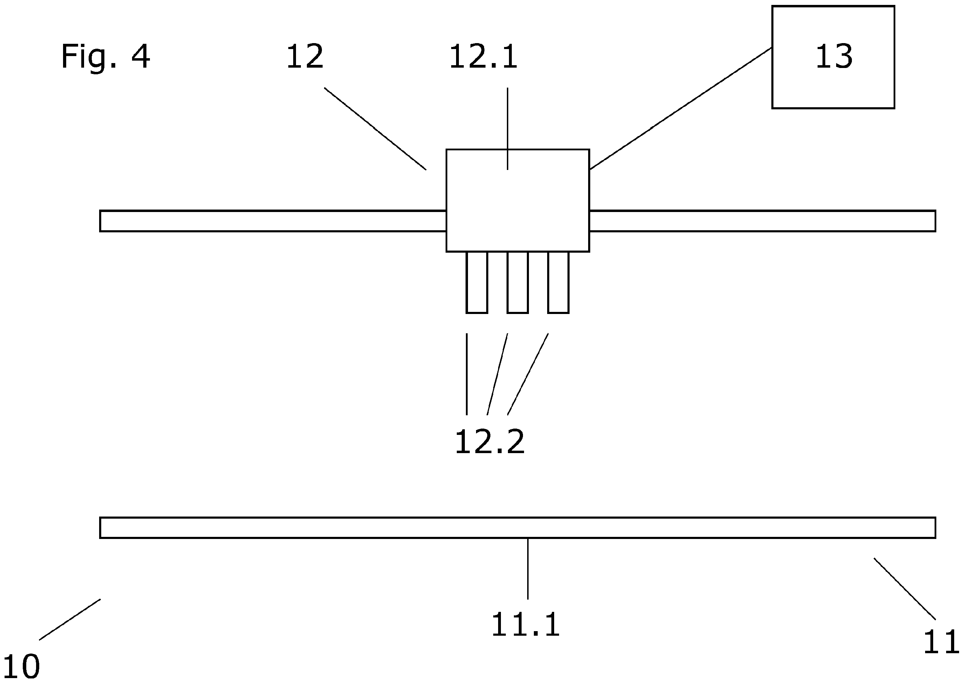

Fig. 1 zeigt Wirkbereiche einer beispielhaften erfindungsgemäßen Sondenanordnung eines thermischen Durchflussmessgerät und ihre Ausrichtung in einem Messrohr; Fig. 2 a) zeigt einen Querschnitt durch eine beispielhafte erste, zweite oder dritte Sonde und Fig. 2 b) zeigt eine Seitenansicht einer beispielhaften vierten Sonde; und Fig. 3 zeigt eine Seitenansicht auf einen erfindungsgemäßen Sensor; und Fig. 4 skizziert einen Aufbau eines beispielhaften schematischen erfindungsgemäßen thermischen Durchflussmessgeräts.

Fig. 1 zeigt Wirkbereiche einer beispielhaften Sondenanordnung und einer beispielhaften erfindungsgemäßen Sondenanordnung in einem Messrohr 11 mit einer Messrohrwand 11.1 mit jeweils einer ersten Sonde 12.21, einer zweiten Sonde 12.22, einer dritten Sonde 12.23 und einer vierten Sonde 12.24. Die Wirkbereiche sind die Bereiche, in denen Sondenwirkkörper W, (siehe Figs. 2 a), 2 b) und 3)) ihre Wirkung entfalten. Die Sondenwirkkörper schließen jeweils an einen Sondengrundkörper G der entsprechenden Sonde an, welche Sondengrundkörper an einen Sensorgrundkörper 12.1 angeschlossen sind (siehe Figs. 2 a), 2 b) und 3)). Die Wirkung der Sondenwirkkörper ist es, das Medium zu heizen, die Temperatur des Mediums zu bestimmen und/oder eine Strömung des Mediums im Messrohr zu beeinflussen.

Die Sondengrundkörper einer Sondenanordnung spannen eine Raute R auf, wobei die Raute durch Flächenschwerpunkte von Querschnitten der Sondengrundkörper definiert ist und eine erste Diagonale D1 und eine zweite Diagonale D2 aufweist. Eine erste Sonde 12.21 ist dazu eingerichtet ist, die Temperatur des Mediums zu messen,
wobei eine zweite Sonde 12.22 und eine dritte Sonde 12.23 dazu eingerichtet sind, das Medium zu beheizen und jeweils die eigene Temperatur zu bestimmen,
wobei die erste Sonde auf einer ersten Seite der ersten Diagonalen angeordnet ist, und wobei die dritte Sonde auf einer zweiten Seite der ersten Diagonalen angeordnet ist, wobei die zweite und eine vierte Sonde 12.24 auf gegenüberliegenden Seiten der zweiten Diagonalen angeordnet sind,

Erfindungsgemäß weist die erst Diagonale D1 der Raute einen Drehwinkel η zu einer Normalen 11.3 eines Messrohrquerschnitts 11.2 auf, wobei η größer als 1 Grad und insbesondere größer als 2 Grad und bevorzugt größer als 3 Grad ist.

Es hat sich überraschenderweise gezeigt, dass ein leichtes Drehen des Sensorgrundkörpers eine deutlich bessere Strömungsrichtungserkennung über einen weiten Geschwindigkeitsbereich aufweist, Insbesondere bei hohen Strömungsgeschwindigkeiten größer als 70 m/s wirkt sich eine Drehung des Sensors als vorteilhaft aus.

In einer Ausgestaltung ist η kleiner als 20 Grad und insbesondere kleiner als 15 Grad und bevorzugt kleiner als 10 Grad ist. Wichtig hierbei ist, dass eine in einem Strömungsschatten befindliche Sonde, also je nach Strömungsrichtung die erste Sonde oder die dritte Sonde vollständig im Strömungsschatten gebildet aus der zweiten Sonde und der vierten Sonde verbleibt.

Ein Innenwinkel β, welcher der ersten Sonde zugeordnet ist, ist dabei kleiner als 90 Grad, so dass die Sondenanordnung einen kleinen Strömungswiderstand aufweist.

Bei einer ersten Sondenanordnung weist die vierte Sonde 12.24 in ihrem Wirkbereich wie die anderen Sonden einen runden Umriss auf. Auf diese Weise kann ein Sensor mit den Sonden kosteneffizient gefertigt werden. Bei einer zweiten, erfindungsgemäßen Sondenanordnung weist die vierte Sonde 12.24 in ihrem Wirkbereich einen nichtrunden Umriss auf, wobei die Sonde parallel zur ersten Diagonalen D1 eine erste Breite B1 sowie parallel zur zweiten Diagonalen D2 eine zweite Breite B2 aufweist, wobei die zweite Breite mindestens 10% größer ist als die erste Breite. Ein geometrischer Schwerpunkt GS4 (siehe Fig. 2 b)) des Sondenwirkkörpers der vierten Sonde ist in Richtung der zweiten Sonde versetzt. Dadurch wird eine teilweise Sperrwirkung für eine Strömung eines Mediums durch das Messrohr in den Wirkbereichen der Sonden entlang der zweiten Diagonalen D2 erzielt. Dadurch kann ein Einfluss der das Medium beheizenden dritten Sonde 12.23 auf die erste Sonde vermindert und somit eine Messgenauigkeit des Sensors erhöht werden. Ein Flächenschwerpunkt eines Querschnitts des Sondengrundkörpers der vierten Sonde weist dabei zu einem Flächenschwerpunkt eines Querschnitts des Sondengrundkörpers der zweiten Sonde einen zweiten Abstand auf. Ein Minimalabstand der Außenfläche des Sondenwirkkörpers der vierten Sonde AWK zu einer Außenfläche des Sondenwirkkörpers der zweiten Sonde kleiner ist als 30% und insbesondere kleiner als 15% und bevorzugt kleiner als 5% des zweiten Abstands.

Fig. 2 a) zeigt einen Längsschnitt durch eine beispielhafte erste, zweite oder dritte Sonde, wobei eine Sondenhülse SH einen Innenraum IR der Sonde definiert, in welchem Innenraum die Sonde ein Widerstandsthermometer WT aufweist. Das Widerstandsthermometer ist dabei über ein Kontaktmittel thermisch und mechanisch mit der Sondenhülse gekoppelt. Das Kontaktmittel kann beispielsweise ein während der Herstellung der Sonde aufgeschmolzenes und nach Erstarren anschließend bearbeitetes Schmelzgut sein.

Fig. 2 b) zeigt eine zu einem Messrohrquerschnitt senkrecht Aufsicht auf eine beispielhafte vierte Sonde, welche in ihrem Wirkbereich W verbreitert ist und somit eine vergrößerte Außenfläche AWK aufweist. Ein geometrischer Schwerpunkt GS4 des Sondenwirkkörpers der vierten Sonde ist dabei zu einer Längsachse des Grundkörpers versetzt.

Fig. 3 zeigt eine schematische Seitenansicht eines Sensors 12 eines thermischen Durchflussmessgeräts, welcher Sensor einen Sensorgrundkörper 12.1 und Sonden 12.2 aufweist, wobei die Sonden wie in Figs. 2 a) und b) beschrieben jeweils einen Sondengrundkörper G und einen Sondenwirkkörper W umfassen.

Fig. 4 skizziert einen schematischen Aufbau eines erfindungsgemäßen thermischen Durchflussmessgeräts 10 mit einem Messrohr 11 mit einer Messrohrwand 11.1, einem Sensor 12 mit einem Sensorgrundkörper 12.1 und mit Sonden 12.2, und einer elektronischen Mess-/Betriebsschaltung 13 zum Betreiben des Sensors und Bereitstellen von Durchflussmesswerten. Der Sensorgrundkörper ist dabei in der Messrohrwand mediendicht angebracht. Die Wirkbereiche der Sonden sind dabei bevorzugt in einem Strömungsbereich des Mediums angeordnet, in welchem Strömungsbereich ein lokaler Massedurchfluss weniger als 10% und insbesondere weniger als 5% und bevorzugt weniger als 2% von einem über einen Strömungsquerschnitt gebildeten Mittelwert abweicht.

### Bezugszeichenliste

- 10: thermisches Durchflussmessgerät
- 11: Messrohr
- 11.1: Messrohrwand
- 11.2: Messrohrquerschnitt
- 11.3: Normale
- 12: Sensor
- 12.1: Sensorgrundkörper
- 12.2: Sonde
- 12.21: erste Sonde
- 12.22: zweite Sonde
- 12.23: dritte Sonde
- 12.24: vierte Sonde
- 13: elektronische Mess-/Betriebsschaltung
- G: Sondengrundkörper
- W: Sondenwirkkörper
- SH: Sondenhülse
- R: Raute
- AWK: Außenfläche Sondenwirkkörper
- D1: erste Diagonale
- D2: zweite Diagonale
- GS4: geometrischer Schwerpunkt des Sondenwirkkörpers der vierten Sonde

- WT: Widerstandsthermometer
- IR: Innenraum
- β: Innenwinkel
- B1: erste Breite
- B2: zweite Breite
- η: Drehwinkel

## Patentansprüche

1. Thermisches Durchflussmessgerät (10) zur Messung des Massedurchflusses eines insbesondere gasförmigen Mediums in einem Messrohr umfassend:
ein Messrohr (11) mit einer Messrohrwand (11.1);
einen Sensor (12) mit vier Sonden (12.2), welche Sonden ausgehend von einem Sensorgrundkörper (12.1) in das Messrohr hineinragen, wobei die Sonden dazu eingerichtet sind, das Medium zu heizen, dessen Temperatur zu bestimmen oder eine Strömung des Mediums im Messrohr zu beeinflussen;
eine elektronische Mess-/Betriebsschaltung (13), welche dazu eingerichtet ist, zumindest drei Sonden zu betreiben und mittels deren Betrieb Durchflussmesswerte zu erstellen und bereitzustellen,
wobei jede Sonde einen Sondengrundkörper (G) und einen Sondenwirkkörper (W) aufweist, wobei der Sondengrundkörper jeweils auf einer dem Sensorgrundkörper zugewandten Seite der entsprechenden Sonde angeordnet ist, und wobei der Sondenwirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen,
wobei die Sondengrundkörper säulenförmig ausgestaltet sind,
wobei die Sondengrundkörper auf einer Oberfläche des Sensorgrundkörpers eine Raute (R) aufspannen, wobei die Raute durch Flächenschwerpunkte von Querschnitten der Sondengrundkörper definiert ist und eine erste Diagonale (D1) und eine zweite Diagonale (D2) aufweist,
wobei eine erste Sonde (12.21) dazu eingerichtet ist, die Temperatur des Mediums zu messen,
wobei eine zweite Sonde (12.22) und eine dritte Sonde (12.23) dazu eingerichtet sind, das Medium zu beheizen und jeweils die eigene Temperatur zu bestimmen,
wobei die erste Sonde auf einer ersten Seite der ersten Diagonalen angeordnet ist, und wobei die dritte Sonde auf einer zweiten Seite der ersten Diagonalen angeordnet ist, wobei die zweite und eine vierte Sonde (12.24) auf gegenüberliegenden Seiten der zweiten Diagonalen angeordnet sind,
wobei eine erste Diagonale (D1) der Raute einen Drehwinkel η zu einer Normalen (11.3) eines Messrohrquerschnitts (11.2) aufweist,
wobei η größer als 1 Grad und insbesondere größer als 2 Grad und bevorzugt größer als 3 Grad ist,
**dadurch gekennzeichnet, dass**
die vierte Sonde dazu eingerichtet ist, eine Teilströmung des Mediums zwischen der ersten Sonde und der dritten Sonde zu behindern,
wobei der Sondenwirkkörper (W) der vierten Sonde (12.24) parallel zur ersten Diagonalen (D1) eine erste Breite (B1) und parallel zur zweiten Diagonalen (D2) eine zweite Breite (B2) aufweist, wobei die zweite Breite um einen Faktor von mindestens 1.1 und insbesondere mindestens 1.2 und bevorzugt mindestens 1.3 größer ist als die erste Breite,
und wobei ein geometrischer Schwerpunkt (GS4) des Sondenwirkkörpers der vierten Sonde in Richtung der zweiten Sonde versetzt ist.

2. Durchflussmessgerät nach einem der vorigen Ansprüche,
wobei η kleiner als 20 Grad und insbesondere kleiner als 15 Grad und bevorzugt kleiner als 10 Grad ist.

3. Durchflussmessgerät nach Anspruch 1 oder 2,
wobei eine Außenfläche (AWK) des Sondenwirkkörpers der vierten Sonde symmetrisch bezüglich der zweiten Diagonalen ist.

4. Durchflussmessgerät nach einem der vorigen Ansprüche,
wobei die erste Sonde, die zweite Sonde und die dritte Sonde jeweils eine Sondenhülse (SH) umfassen,
wobei das Durchflussmessgerät Widerstandthermometer (WT) aufweist, wobei in durch die Sondenhülsen umfassten Innenräumen (IR) der ersten, zweiten und dritten Sonde jeweils mindestens ein Widerstandthermometer angeordnet ist, welches Widerstandthermometer dazu eingerichtet ist, eine Temperatur zu erfassen oder Wärmeenergie abzugeben.

5. Durchflussmessgerät nach einem der vorigen Ansprüche,
wobei die vierte Sonde massiv ist.

6. Durchflussmessgerät nach einem der vorigen Ansprüche,
wobei ein zur ersten Sonde gehörender Innenwinkel β der Raute kleiner als 90° und insbesondere kleiner als 75° und bevorzugt kleiner als 60° ist.

7. Durchflussmessgerät nach einem der vorigen Ansprüche,
wobei ein Flächenschwerpunkt eines Querschnitts des Sondengrundkörpers der vierten Sonde zu einem Flächenschwerpunkt eines Querschnitts des Sondengrundkörpers der zweiten Sonde einen zweiten Abstand aufweist.
wobei ein Minimalabstand der Außenfläche des Sondenwirkkörpers der vierten Sonde zu einer Außenfläche des Sondenwirkkörpers der zweiten Sonde kleiner ist als 30% und insbesondere kleiner als 15% und bevorzugt kleiner als 5% des zweiten Abstands.

8. Durchflussmessgerät nach einem der vorigen Ansprüche,
wobei ein erster Außendurchmesser der ersten Sonde, der zweiten Sonde sowie der dritten Sonde in den jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm ist.

9. Durchflussmessgerät nach einem der vorigen Ansprüche,
wobei ein Flächenschwerpunkt eines Querschnitts des Sondengrundkörpers der ersten Sonde zu einem Flächenschwerpunkt eines Querschnitts des Sondengrundkörpers der dritten Sonde einen ersten Abstand aufweist,
wobei der erste Abstand mindestens zwei erste Außendurchmesser ist.

10. Durchflussmessgerät nach einem der vorigen Ansprüche,
wobei Querschnitte der ersten Sonde, der zweiten Sonde und sowie der dritten Sonde zumindest in Bereichen der Sondenwirkkörper einen runden Umriss aufweisen.

## Claims

1. Thermal flow meter (10) for measuring the mass flow, in particular of a gaseous medium, in a measuring tube, comprising:
a measuring tube (11) with a measuring tube wall (11.1);
a sensor (12) with four probes (12.2), wherein the probes extend into the measuring tube starting from a sensor base body (12.1) and wherein the probes are configured to heat up the medium, determine its temperature or influence a flow of the medium in the measuring tube;
an electronic measuring/operating circuit (13) that is configured to operate at least three probes, as well as to both prepare and make available the flow readings attained through their operation,
wherein each probe exhibits one probe base body (G) and one active probe body (W), wherein the probe base body is arranged on a side of the corresponding probe facing the sensor base body and wherein the active probe body is arranged on a side of the corresponding probe facing away from the sensor base body,
wherein the active probe body is configured to heat up the medium, determine the temperature of the medium and/or influence a flow of the medium in the measuring tube,
wherein the probe base bodies feature a column-shaped design,
wherein the probe base bodies are spread out on a surface of the sensor base body in a rhombus shape (R), wherein the rhombus is defined by centroid points of cross-sections of the probe base body and exhibits both a first diagonal (D1) and a second diagonal (D2),
wherein a first probe (12.21) is configured to measure the temperature of the medium,
wherein a second probe (12.22) and a third probe (12.23) are configured to heat up the medium and each determine their own temperature,
wherein the first probe is arranged on a first side of the first diagonal and wherein the third probe is arranged on a second side of the first diagonal, wherein the second probe and a fourth probe (12.24) are arranged on opposing sides of the second diagonal,
wherein a first diagonal (D1) of the rhombus shape exhibits a rotation angle η to a standard (11.3) of a measuring tube cross-section (11.2),
wherein η is greater than 1 degree, in particular greater than 2 degrees and preferably greater than 3 degrees,
**characterized in that**
the fourth probe is configured to restrict a partial flow of the medium between the first probe and the third probe,
wherein the active probe body (W) of the fourth probe (12.24) exhibits a first width (B1) parallel to the first diagonal (D1) and a second width (B2) parallel to the second diagonal (D2), wherein the second width is greater than the first width by a factor of at least 1.1, in particular at least 1.2 and preferably at least 1.3,
and wherein a centroid (GS4) of the active probe body of the fourth probe is offset in the direction of the second probe.

2. Flow meter according to one of the preceding claims,
wherein η is less than 20 degrees, in particular less than 15 degrees and preferably less than 10 degrees.

3. Flow meter according to claim 1 or 2,
wherein an outer surface (AWK) of the active probe body of the fourth probe is symmetrical relative to the second diagonal.

4. Flow meter according to one of the preceding claims,
wherein the first probe, the second probe and the third probe each include a probe sleeve (SH),
wherein the flow meter exhibits resistance thermometers (WT), wherein at least one resistance thermometer, which is configured to record a temperature or dissipate thermal energy, is arranged in each of the interior spaces (IR) of the first, second and third probe encapsulated by the probe sleeves.

5. Flow meter according to one of the preceding claims,
wherein the fourth probe is solid.

6. Flow meter according to one of the preceding claims,
wherein an internal angle β of the rhombus belonging to the first probe is less than 90°, in particular less than 75° and preferably less than 60°.

7. Flow meter according to one of the preceding claims,
wherein a centroid point of a cross-section of the probe base body of the fourth probe exhibits a second distance from a centroid point of a cross-section of the probe base body of the second probe.
wherein a minimum distance of the outer surface of the active probe body of the fourth probe from an outer surface of the probe base body of the second probe is less than 30%, in particular less than 15% and preferably smaller than 5% of the second distance.

8. Flow meter according to one of the preceding claims,
wherein a first external diameter of the first probe, of the second probe, as well as of the third probe in the respective active ranges is at least 1 mm, in particular 1.5 mm and preferably at least 2 mm and/or a maximum of 7 mm, in particular a maximum of 5 mm and preferably a maximum of 4 mm.

9. Flow meter according to one of the preceding claims,
wherein a centroid point of a cross-section of the probe base body of the first probe exhibits a first distance from a centroid point of a cross-section of the probe base body of the third probe
wherein the first distance is at least two times the first external diameter.

10. Flow meter according to one of the preceding claims,
wherein cross-sections of the first probe, of the second probe, as well as of the third probe exhibit a round shape at least in areas of the active probe bodies.

## Revendications

1. Débitmètre thermique (10) destiné à la mesure du débit massique d'un produit, notamment gazeux, dans un tube de mesure, lequel débitmètre comprend :
un tube de mesure (11) avec une paroi de tube de mesure (11.1) ;
un capteur (12) avec quatre sondes (12.2), lesquelles sondes pénètrent dans le tube de mesure en partant d'un corps de base de capteur (12.1), les sondes étant conçues pour chauffer le produit, déterminer sa température ou influencer un écoulement du produit dans le tube de mesure ;
un circuit électronique de mesure/d'exploitation (13), lequel est conçu pour exploiter au moins trois sondes et pour générer et mettre à disposition des valeurs mesurées de débit au moyen de leur exploitation,
chaque sonde présentant un corps de base de sonde (G) et un corps actif de sonde (W), le corps de base de sonde étant disposé respectivement sur un côté de la sonde correspondante tourné vers le corps de base de capteur, et le corps actif de sonde étant disposé respectivement sur un côté de la sonde correspondante opposé au corps de base de capteur,
le corps actif de sonde étant conçu pour chauffer le produit, déterminer la température du produit et/ou influencer un écoulement du produit dans le tube de mesure,
les corps de base de la sonde étant conçus en forme de colonne,
les corps de base des sondes définissant un losange (R) sur une surface du corps de base du capteur, le losange étant défini par les centres de gravité de surface des sections transversales des corps de base de sonde et comprenant une première diagonale (D1) et une deuxième diagonale (D2),
une première sonde (12.21) étant conçue pour mesurer la température du produit,
une deuxième sonde (12.22) et une troisième sonde (12.23) étant conçues pour chauffer le produit et déterminer respectivement leur propre température,
la première sonde étant disposée sur un premier côté de la première diagonale, et la troisième sonde étant disposée sur un deuxième côté de la première diagonale, la deuxième et une quatrième sonde (12.24) étant disposées sur des côtés opposés de la deuxième diagonale,
une première diagonale (D1) du losange présentant un angle de rotation η par rapport à une normale (11.3) d'une section transversale de tube de mesure (11.2),
η étant supérieur à 1 degré et notamment supérieur à 2 degrés et de préférence supérieur à 3 degrés,
**caractérisé en ce que**
la quatrième sonde est conçue pour entraver un écoulement partiel du produit entre la première sonde et la troisième sonde,
le corps actif de sonde (W) de la quatrième sonde (12.24) présentant parallèlement à la première diagonale (D1) une première largeur (B1) et parallèlement à la deuxième diagonale (D2) une deuxième largeur (B2), la deuxième largeur étant supérieure à la première largeur d'un facteur d'au moins 1,1 et notamment d'au moins 1,2 et de préférence d'au moins 1,3,
et un centre de gravité géométrique (GS4) du corps actif de la quatrième sonde étant décalé en direction de la deuxième sonde.

2. Débitmètre selon l'une des revendications précédentes,
pour lequel η est inférieur à 20 degrés, notamment inférieur à 15 degrés et de préférence inférieur à 10 degrés.

3. Débitmètre selon la revendication 1 ou 2,
pour lequel une surface extérieure (AWK) du corps actif de la quatrième sonde est symétrique par rapport à la deuxième diagonale.

4. Débitmètre selon l'une des revendications précédentes,
pour lequel la première sonde, la deuxième sonde et la troisième sonde comprennent chacune un manchon de sonde (SH),
le débitmètre comprenant des thermorésistances (WT), au moins une thermorésistance étant disposée dans des espaces internes (IR) de la première, de la deuxième et de la troisième sonde, lesquels espaces sont entourés par les manchons de sonde, laquelle thermorésistance est adaptée pour détecter une température ou pour émettre une énergie thermique.

5. Débitmètre selon l'une des revendications précédentes,
pour lequel la quatrième sonde est pleine.

6. Débitmètre selon l'une des revendications précédentes,
pour lequel un angle intérieur β du losange appartenant à la première sonde est inférieur à 90° et notamment inférieur à 75° et de préférence inférieur à 60°.

7. Débitmètre selon l'une des revendications précédentes,
pour lequel un centre de gravité de surface d'une section transversale du corps de base de la quatrième sonde présente une deuxième distance par rapport à un centre de gravité de surface d'une section transversale du corps de base de la deuxième sonde,
une distance minimale de la surface extérieure du corps actif de la quatrième sonde par rapport à une surface extérieure du corps actif de la deuxième sonde étant inférieure à 30 % et notamment inférieure à 15 % et de préférence inférieure à 5 % de la deuxième distance.

8. Débitmètre selon l'une des revendications précédentes,
pour lequel un premier diamètre extérieur de la première sonde, de la deuxième sonde ainsi que de la troisième sonde dans les zones actives respectives est d'au moins 1 mm et notamment d'au moins 1,5 mm et de préférence d'au moins 2 mm et/ou au plus de 7 mm et notamment au plus de 5 mm et de préférence au plus de 4 mm.

9. Débitmètre selon l'une des revendications précédentes,
pour lequel un centre de gravité de surface d'une section transversale du corps de base de la première sonde présente une première distance par rapport à un centre de gravité de surface d'une section transversale du corps de base de la troisième sonde,
la première distance étant égale à au moins deux premiers diamètres extérieurs.

10. Débitmètre selon l'une des revendications précédentes,
pour lequel les sections transversales de la première sonde, de la deuxième sonde et de la troisième sonde présentent un contour rond au moins dans les zones des corps actifs de sonde.
